# EUROPEAN PATENT APPLICATION

(11) **EP 2 982 274 A2**
(43) Date of publication of application: **10.02.2016**
(21) Application number: 14189560.7
(22) Date of filing: 20.10.2014
(51) Int. Cl.: A47G 19/22

(54) **A receptacle with a display**

(30) Priority: 19.06.2014 US 201414309270
(71) Applicant: Gustav Paulig Ltd, 00981 Helsinki (FI)
(72) Inventor: Raunio, Juha-Matti Viljam, 02130 Espoo (FI); Hokkanen, Juhana Samuel, 00390 Helsinki (FI); Kalliala, Juuso Paavo Rafael, 00160 Helsinki (FI); Köykkä, Mikko Markus, 00150 Helsinki (FI); Kumpulainen, Miika Joonas, 00610 Helsinki (FI)
(74) Representative: Berggren Oy Ab

(57) **Abstract**

A coffee mug (100) comprises an energy harvesting element (101), such as a peltier element, for harvesting electric energy from the temperature difference between said liquid (102) and an ambient of the receptacle (100). In addition the mug (100) comprises a data processing device, a display (104,119) device and a data communication (201) device for receiving data wirelessly from an outer (108) application system. The energy harvesting element (101) is configured to supply electric energy to said data communication (201) device, data processing device and display (104,119) device. The data processing device is then configured to receive said data via said data communication (201) device and control said display (104,119) device to display (104,119) said received data.

## Description

### TECHNICAL FIELD OF THE INVENTION

The invention relates to a receptacle with a display device, such as a mug and in particularly a coffee mug with a display device for receiving liquid, such as coffee.

### BACKGROUND OF THE INVENTION

Plurality of different types of receptacle, such as mugs, provided with text, graphics or figures are known. In addition also receptacles with display devices are known from prior art, where the receptacle has a display for displaying e.g. a particular visual effect, such as text, graphics or combination thereof stored initially into a memory means of the receptacle.

There are however some disadvantages relating to the known prior art, such as a very limited way to display text or graphics stored beforehand or initially into a memory means of the receptacle. Thus the known prior devices or receptacles are not very easy to modify to display different kinds of contents, especially any updateable content.

### SUMMARY OF THE INVENTION

An object of the invention is to alleviate and eliminate the problems relating to the known prior art. Especially the object of the invention is to provide a receptacle with a display device such that content to be displayed is easy to update. In addition the object of the invention is to provide the receptacle with an efficient energy feeding devices so that there is necessarily no need for battery or other fixed energy storage.

The object of the invention can be achieved by the features of independent claims.

The invention relates to a receptacle for receiving liquid according to claim 1. In addition the invention relates to a communication system for communicating with a receptacle according to claim 10.

According to an embodiment of the invention a receptacle, such as a mug, in particularly a coffee mug, for receiving a hot or cold liquid or beverage, for example hot coffee is hereby provided. The receptacle comprises an energy harvesting element, such as a peltier element, for harvesting electric energy generated by the temperature difference between the liquid and an ambient of the receptacle. The receptacle comprises also a data processing device, e.g. a microprocessor, a display device, such as a rigid flat or rigid curved electric paper based display, and a data communication device, such as Bluetooth or the like technology, for receiving data wirelessly from an outer application system to be displayed via the display device.

The energy harvesting element is configured to supply electric energy to the data communication device, data processing device and display device, when the hot (or gold) liquid (in relation to the ambient temperature) is poured into the receptacle. The data processing device is, when supplied by the electric energy, configured to receive the data via the data communication device, so e.g. establish a data connection with an outer application, such as the application run on a smartphone or the like. The data communication device of the receptacle may also establish a data connection with a control system, for example a cloud based system, via the smartphone or the like, and the control system has the application for controlling the data traffic to be send to the receptacle and again to the display to be displayed. The data processing device also controls the display device to display the received data.

In addition the receptacle may also comprise a memory device for storing data, such as text, image or video data, which can be displayed when the hot or gold content is poured into the receptacle.

According to an advantageous embodiment the receptacle comprises inner and outer receptacle structures, which can be coupled within each other to form said receptacle. According to an example the structures may be coupled with each other by gluing, laser or ultrasonic welding or the like, but according to an embodiment at least portion or whole of the inner structure is configured to be coupled with outer or other receptacle structures in detachable or releasable manner, whereupon washing of the inner structure is easier and whereupon also the vulnerable portions of the receptacle, such as the device or energy harvesting element or the like can be attached to the outer structures or arranged between the outer and inner structures. Then the receptacle functions as a cupholder, and offers opportunity for using dishwashing machine or even microwave oven.

The display device may be coupled for example between the outer and inner structures for environmental protection purposes of the display and other components. The display device is advantageously (thermally) insulated from the inner receptacle structure. By this for example damages of the display structure due to hot liquid and thermal expansion can be avoided. The insulation can be implemented by an air or other gas gap, or other insulation material. In addition, due to the dual structure (inner and outer) any thermal leakages and thereby cooling of the content of the receptacle cad be minimized.

According to an example the energy harvesting element may be provided with a mass portion. The energy harvesting element is coupled with the inner receptacle structure so that the thermal energy is configured to be conducted to the mass portion and again for energy harvesting element. Thus, when the energy harvesting element is coupled with the inner receptacle structure with said mass portion, excess portion of the heat energy can be stored to the mass portion, whereupon the energy harvesting element may use the thermal energy stored to the mass portion even when the receptacle is emptied. According to an embodiment the mass portion may be used for keeping a temperature difference between the energy harvesting element and the ambient environment. In addition the receptacle may comprise additional energy storage, such as super capacitor or rechargeable battery or the like, which can be loaded by the energy harvesting element when converting electric energy from the temperature difference. Thus the stored electric energy can be used from these additional energy storages afterwards.

The energy harvesting element is advantageously coupled with the inner structure of the receptacle via a thermally conductive interface element, such as silicone, overmolded metal plate, metal element surrounded by plastic or rubber, or composite element comprising mixing of plastic and metal, such as aluminium, or for example, by adding metal or other highly thermal conductive material powder to the injection moulding polymer(s) prior to injection moulding of the inner part. The interface element is advantageously arranged to be faced with the liquid received by the receptacle. In addition the energy harvesting element is advantageously coupled with the structure of the receptacle in an elastic manner in order to balance thermal expansion and potential damage to the inner part of the mug and/or to the energy harvesting element. These features offer clear advantage, namely otherwise the energy harvesting element would be in direct contact with the liquid, which may arise a health risk and additionally vulnerable the energy harvesting element. In addition the direct thermal contact with the hot or cold liquid would cause very rapid thermal expansion to the energy harvesting element, whereupon the structure of the (rigid) energy harvesting element might get physically broken.

The receptacle comprises naturally also electric wires from the energy harvesting element to the electric components of the receptacle, such as energy storages, data processing device, a display device and to a data communication device. The electric wires are advantageously integrated e.g. as a 3D structure onto the surface of the structure of the receptacle.

According to an embodiment the receptacle may also comprise an accelerometer or gyroscope device for determining acceleration of the receptacle. The acceleration data can then be used as a user interface input data, such as controlling the data to be displayed, like change a text, figure or the like on the display. The receptacle may be taught e.g. by preliminary taught movements, patterns or accelerations, whereupon the acceleration data can be used for controlling the data communication, such as receiving new data, and/or change the data to be displayed with said display device based on the determined acceleration. For example a figure, photo or page to be displayed can be changed or the display can be resetting or clearing e.g. by turning, tilting or shaking the mug or when a gulp or drink is taken.

In addition the receptacle may also determine a drinking habit of a user based on the determined acceleration and tilting data. Thus any information related to the drinking habit of the user may be displayed by the display device of the receptacle or the information may be send via a data communication device of the receptacle to the outer application system.

The display device may be implemented in many ways, but according to an example the display device comprises an electronic paper, a TFT display, a dot matrix or segmented display, a black and white display, grey scale display, coloured display or even hologram display or touch sensitive display. The display device may be a curved or bent display comprising polymer. Advantageously the display device is a rigid display device. In addition for example the electronic paper display device offers remarkable advantages, namely data can be displayed even when the mug is empty, because the image is a stationary image and does not need any electric energy after loading.

In addition the receptacle may comprise a touch sensitive screen or surface, which may be configured to activated e.g. when the user accepts advertisement data or the like. Thus, when the touch sensitive screen or surface is turned on only a certain short time, the implementation saves energy and preventing erroneous operation.

The receptacle may also comprise a positioning device, such as a GPS for outdoor positioning or local positioning device, such as positioning device based on a cellular network positioning, WIFI or Bluetooth positioning, such as iBeacon. Thus the receptacle may be provided with a map data to be displayed with the display device, whereupon the receptacle can be used as a navigation device using the positioning data and the corresponding map data for navigation.

The receptacle may also comprise an identification device readable outside the receptacle, such as barcode, 2D barcode, or RFID or NFC tag. Thus the receptacle can be identified outside and the identification data can be used for controlling the application or data traffic or content to be transferred to the receptacle. The receptacle can also be paired e.g. with an application and a user account, whereupon the receptacle can be used also as a mobile wallet. According to an embodiment a vending machine, such as a coffee machine may comprise a reader for reading said identification device of the receptacle, whereupon the user may either access the purchase action with a pin code or the like or even only "touching" the reader with the receptacle having said identification device, and the vending machine may charge the user account and fill the receptacle with the content, such as coffee.

According to an example the receptacle comprises also a liquid surface level determining electronic device, such as a capacitive detector or electro-optical detector. The data processing device may thus be configured to control the display device to display the determined or real-time surface level of the liquid. The receptacle may also comprise a transparent portion arranged to indicate the surface level of the liquid in the receptacle directly. The receptacle may also comprise a temperature determining device, such as a thermocouple element, NTC or PTC element, contactless infra-red element, as well as also a concentration and/or roasting level determination device, such as an electro-optical detector for determining of the concentration and/or roasting level (determining e.g. transparency or reflectivity of the liquid inside the receptacle and comparing it to data previously determined), whereupon the data processing device may control the display device to display the determined temperature, concentration and/or roasting level of the content of the receptacle.

According to an embodiment the receptacle may be in a data communication with an application or a communication system having the application, wherein the application can be used for controlling e.g. data traffic to the receptacle, as well as managing any other user related accounts, such as data storages or wallet type implementations. The application may has e.g. an access to a user account, whereupon the application or user account may receive data from other users of the application (or from other application linked with the current application, such as Facebook or Instagram, calendar, time tables, email accounts or the like). Thus the application may control the data to be sent to the data communication device of the receptacle and thereby to be displayed. Also different kinds of advertisement data, dating information, RSS feed, news information, chat messages, SMS or MMS messages, electric book data, image data, video data, time tables, or announcements as well as other data can be sent or uploaded to the application and again to the receptacle. It is to be noted that the receptacle is advantageously in data communication with the application via an outer data processing device or mobile communication device, such as a mobile phone, smartphone, laptop or table computer or the like, whereupon the outer data processing device may establish a data connection with said application. The application may be run e.g. on said outer data processing device, mobile communication device or in other environment, such as server computer or cloud based system, as an example.

According to an embodiment user preferences can be determined from the application or user account in the application (run on a communication system, data processing device, a mobile communication device or in other environment, such as server computer or cloud based system, for example). For example a coffee machine or the like may determine the user preferences stored in a user account based on the read identification information of the identification device of the receptacle, whereupon the coffee machine or the like manufactures a liquid composition, such as strength, roasting level, temperature and volume of coffee with preferred additional (milk, sugar) according to the determined user preferences.

The present invention offers advantages over the known prior art, such as according to an example the receptacle or coffee mug according to the invention uses the heat from coffee to produce a picture on the side of the cup (a heat-activated e-ink display is an example). In addition the invention provides the mug, an application, as well as overall communication system so that different kinds of data for example from social media or other media, can be loaded, communicated and displayed in a very flexible way. In addition the invention enables to use the mug also as an identification device for identifying the user for data communication, such as dating, purposes, as well as also for payment purposes. Also the user habits and other parameters can be easily determined during use of the mug, and communicated to the application for deeper analysis, for example. The user can find a new, surprising or moving picture on the mug's screen every single time the mug is filled. The pictures can either be uploaded from the smart phone or let friends surprise the user by uploading pictures to the mug's screen advantageously via the application or directly, e.g. via WIFI router from the Cloud server or alike. The content of the display on the mug can be changed at any time. Photos are uploaded advantageously using a mobile application.

### BRIEF DESCRIPTION OF THE DRAWINGS

Next the invention will be described in greater detail with reference to exemplary embodiments in accordance with the accompanying drawings, in which:
- Figures 1-3: illustrate principles of exemplary receptacles, such as a mug, in particularly a coffee mug for receiving a liquid according to an advantageous embodiment of the invention,
- Figures 4-5: illustrate principles of exemplary receptacle structures according to an advantageous embodiment of the invention,
- Figure 6-7: illustrate principles of exemplary user interfaces of a receptacle according to an advantageous embodiment of the invention, and
- Figure 8: illustrate principle of an exemplary communication system for communicating with a receptacle according to an advantageous embodiment of the invention.

### DETAILED DESCRIPTION

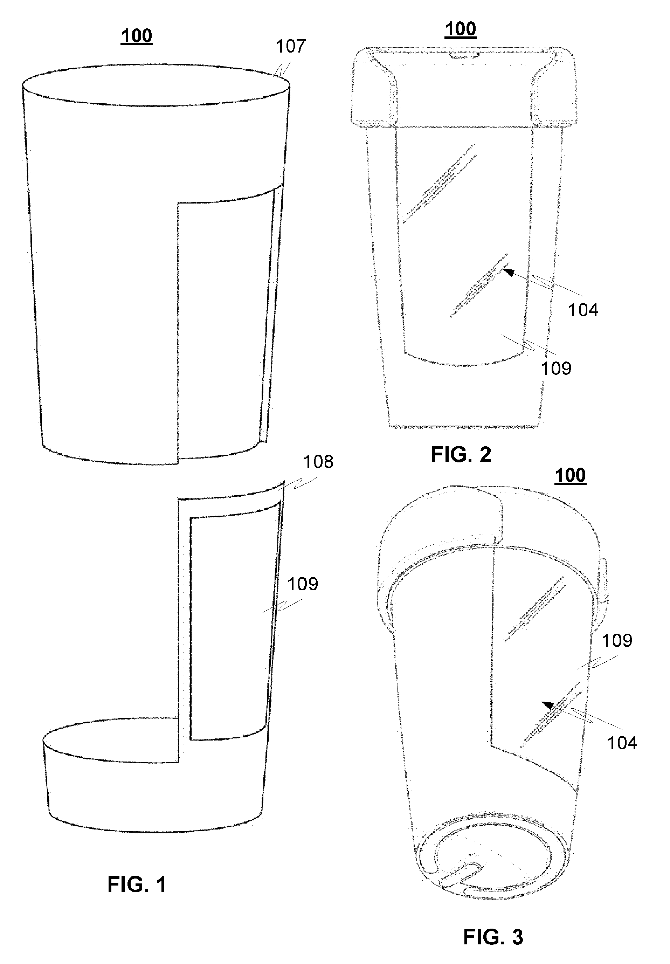

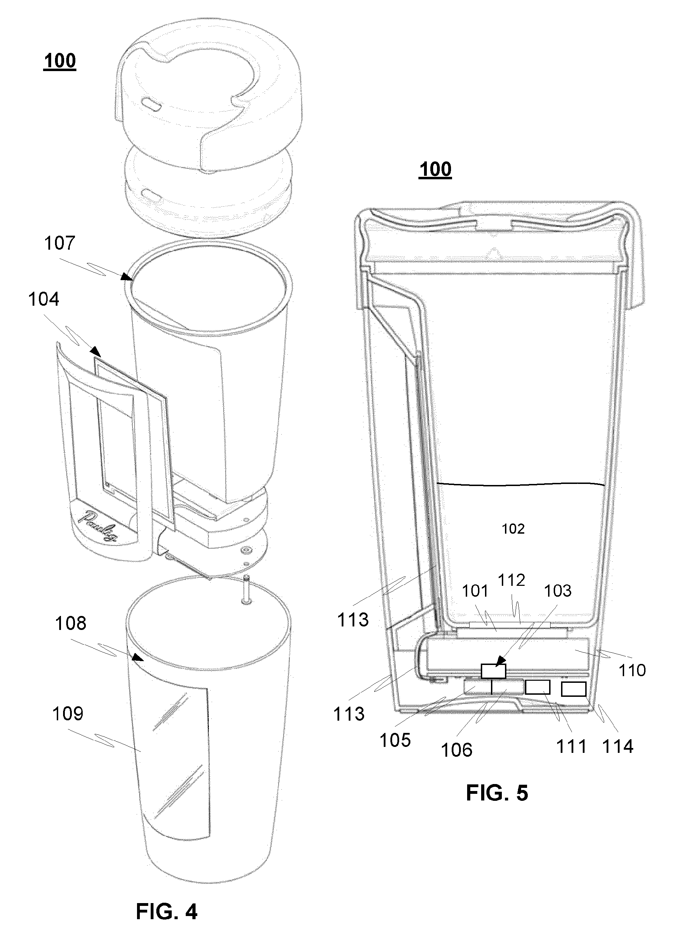

Figures 1-3 illustrate principles of exemplary mugs or cups, in particularly a coffee mug, as the receptacle 100 for receiving a liquid and Figures 4-5 illustrate principles of exemplary receptacle structures according to an advantageous embodiment of the invention, wherein the mug 100 comprises an energy harvesting element 101 for harvesting electric energy generated by the temperature difference between the liquid 102 and an ambient of the receptacle 100. The receptacle 100 comprises a microprocessor 103 as a data processing device, a display device 104 and a data communication device 105 for receiving data wirelessly from an outer application system to be displayed via the display device. The receptacle 100 may also comprise a memory device 106 for storing data, which can be displayed 104 when the hot or gold content is poured into the receptacle 100.

The receptacle comprises inner 107 and outer 108 receptacle structures, which can be coupled within each other to form said receptacle. The display device 104 may be coupled for example between the outer 108 and inner 107 structures. There is advantageously provided a window 109 into the outer structure so that the display and the data displayed can be seen.

The mug may also comprise a mass portion 110 coupled advantageously with the energy harvesting element 101 so that an excess portion of the heat energy can be stored to the mass portion for later usage of the energy harvesting element 101 or transferred from the hot or cold content to the mass portion and again to the energy harvesting element 101. The receptacle 100 may also comprise additional energy storage 111, such as super capacitor or battery. The energy harvesting element 101 is advantageously coupled with the inner structure of the receptacle via a thermally conductive interface element 112.

The receptacle 100 comprises also electric wires 113 from the energy harvesting element to the electric components of the receptacle, such as energy storages, data processing device, a display device and/or to a data communication device. The electric wires are advantageously integrated e.g. as a 3D structure onto the surface of the structure of the receptacle.

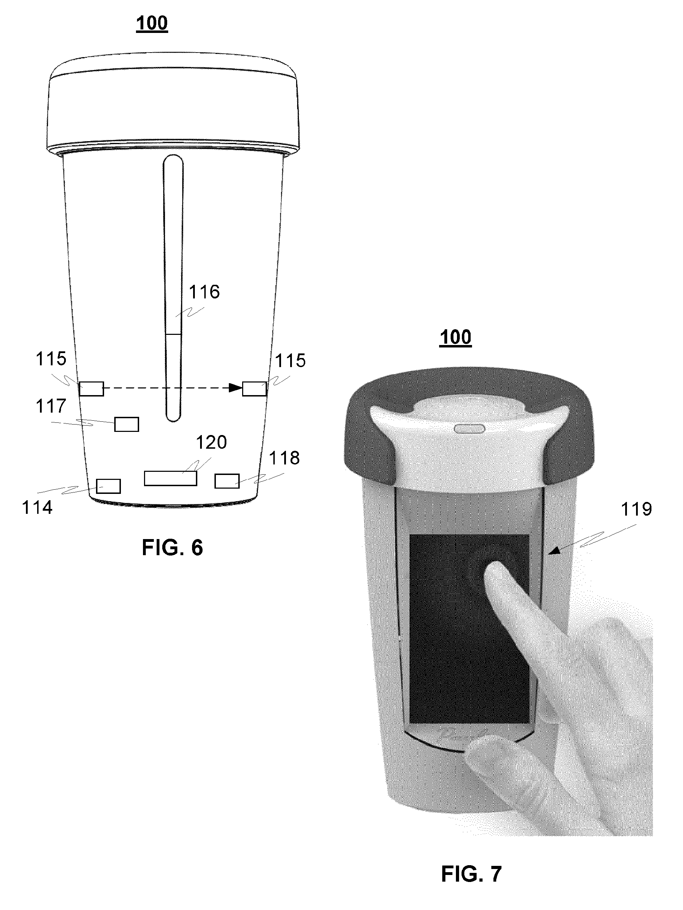

Figure 6 and 7 illustrate principles of exemplary user interfaces of a receptacle according to an advantageous embodiment of the invention. The receptacle 100 may for example comprise an accelerometer 114 or gyroscope device for determining acceleration of the receptacle, as well as a liquid surface level detection device 115, such as an opto-electric component (emission photo diode and corresponding receiver detector device) or a transparent portion 116 arranged to indicate the liquid surface level of the liquid in the receptacle. The receptacle may also comprise a temperature determining device 117. These devices are advantageously connected with the data processing device 103, which may control the display device 104 to display the determined values (liquid surface level, temperature, concentration and/or roasting level) of the content of the receptacle. The receptacle may also comprise a positioning device 118. The receptacle 100 may comprise a touch sensitive screen or surface or even display 119 and an identification device 120 readable outside the receptacle 100.

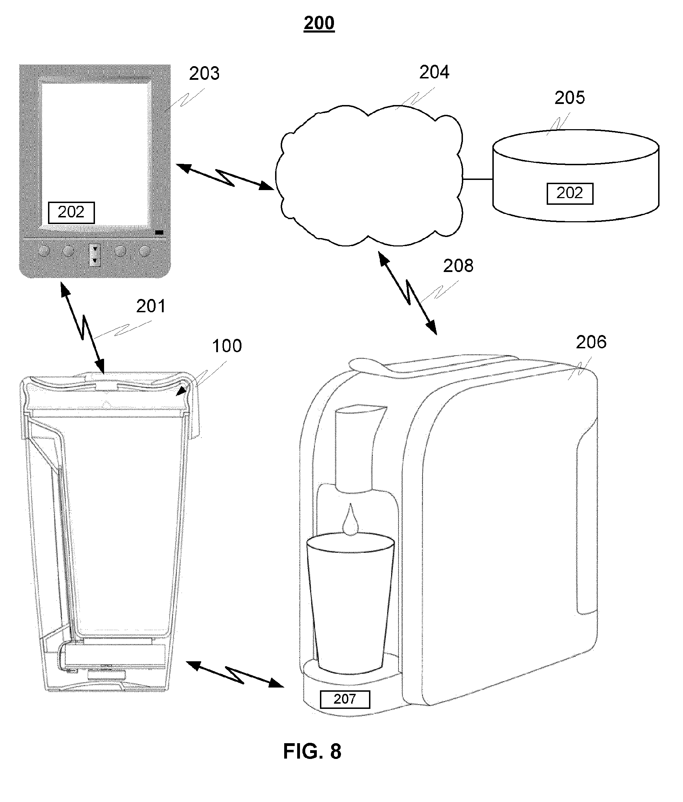

Figure 8 illustrate principle of an exemplary communication system 200 for communicating with a receptacle 100 according to an advantageous embodiment of the invention, wherein the mug 100 is in a data communication 201 with an application 202. The application 202 (or at least portion of it) may locate and be run on a data outer data processing device, i.e. a mobile communication device 203, such as a mobile phone, smartphone 203, laptop or table computer or the like, whereupon the outer data processing device may establish the data connection 201 between the mug 100 and the application 202. It is to be noted that the application 202 or at least portion of it (such as user accounts and other data storages) may be run also in other environment, such as server computer or cloud based system 204 having suitable memory devices 205 and data processing devices, being advantageously in data communication with social media environments, such as Facebook or Instagram, advertisement data bases, as well as a calendar, time tables, email accounts, dating information, RSS feed, news information, chat messages, SMS or MMS messages, electric book data, image data, video data, or announcements or the like, as an example. Also other data can be sent or uploaded to the application 202 and again to the mug via said data connections 201.

The application 202 can be used for controlling e.g. data traffic 201 to the mug, as well as managing any other user related accounts, such as data storages or wallet type implementations. In addition the measured or determined data, such as acceleration data, can be sent 201 from the mug 100 to the application 202, whereupon the application may e.g. analyse the data and determine a drinking habit of a user based on the determined acceleration data. It is to be noted that also the mug may perform the analysis and determinations, but for saving processing power and energy it may be more reasonable to send measured raw data so that the outer device (203, 204) with higher processing power performs the analysis. The outer device (203, 204) may then either store said analysed data or sent 201 the data as a result to the mug 100 for displaying it via the mug's display 104. Also user preferences or other user related data may be stored into the application 202.

The system 200 may also comprise a vending machine, such as a coffee machine 206, which advantageously comprises a reader 207 for reading the identification device 120 of the receptacle 100. The vending machine 206 may also be in a data connection 208 with the application 202, whereupon it can determine the user preferences stored in a user account 202 based on the read identification information of the identification device 120 of the mug.

Thus the coffee machine 206 may manufacture a coffee composition, such as strength, temperature and volume of coffee with preferred additional (milk, sugar) according to the determined user preferences. It is to be noted that these data can also be stored (or received) to the memory device 106 of the mug. The data can also be received from the application via using smartphone 203 or the like or even via the mug 100 data processing device 103 and the corresponding data communication device 105.

According to an embodiment the mug 100 can be used as a wallet and thereby for payment action. As an example the vending machine may e.g. identify the mug, send a sum to the application and thereby charge the user account. According to an example the user may need to input a pin code or the like to the application in order to approve the charging (e.g. via the user interface of the smartphone or the like, or approving the charge by performing a predetermined movements with the cup, said movements being detected by the acceleration determination devices of the mug).

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims. Even if the coffee mug is describes here, it should be understood as an example only and that all the suitable receptacles can be understood under the invention. In addition, even if only few additional devices for determining of accelerations, movements or properties and parameters of the content (liquid in the mug) is presented, it is to be noted that the mug (or other receptacle) may also comprise other devices for determining other parameters, such as pulse meter for determining heart rate of the user and displaying it or sending it to the application. Also other measured and determined data can be sent to the application and again to the social media services (if desired), such as a geographical position and that the user is drinking coffee (based on the determined concentration, roasting level, temperature and/or acceleration data, for example). It is to be noted that an access or approval for sending and uploading the data to the application may be asked from the user.

## Claims

1. A receptacle, such as a mug or a coffee mug, for receiving a liquid, wherein the receptacle comprises:
- an energy harvesting element, such as a peltier element, for harvesting electric energy from the temperature difference between said liquid and an ambient of the receptacle,
- a data processing device,
- a display device,
- a data communication device for receiving data wirelessly from an outer application system,
wherein
- said energy harvesting element is configured to supply electric energy to said data communication device, data processing device and display device, whereupon
- said data processing device is configured to receive said data via said data communication device and control said display device to display said received data.

2. A receptacle of claim 1, wherein the receptacle comprises inner and outer receptacle structures to be coupled within each other to form said receptacle, wherein said display device is coupled between said outer and inner structures and wherein said display device is insulated from the inner receptacle structure, and wherein the outer receptacle structure is configured to form a support structure of the receptacle and the inner receptacle structure is configured to form a receiver portion of the receptacle for receiving said liquid.

3. A receptacle of claim 1 or 2, wherein said energy harvesting element is provided with a mass portion and coupled or configured to be coupled with said inner receptacle structure so that the thermal energy is configured to be conducted to the mass portion and again for energy harvesting element, or wherein said energy harvesting element is coupled with or provided with a thermally conductive interface element and coupled with said inner receptacle structure so that the interface element is arranged to be faced with said liquid received by said receptacle.

4. A receptacle of any of previous claims, wherein said energy harvesting element is coupled with the structure of the receptacle in an elastic manner.

5. A receptacle of any of previous claims, wherein electric wires from the energy harvesting element are integrated on the surface of the structure of the receptacle and configured to be coupled with said display device.

6. A receptacle of any of previous claims, wherein the receptacle comprises an accelerometer or gyroscope device configured to determine acceleration of the receptacle, whereupon
- said receptacle is configured to use said determined acceleration data as a user interface input data,
- said receptacle is configured to control the data communication and/or change the data to be displayed with said display device based on the determined acceleration, and/or
- said receptacle is configured to determine a drinking habit of a user based on said determined acceleration data and display information related to the drinking habit of the user via said display device of the receptacle and/or send information related to the drinking habit of the user via the data communication device to the outer application system.

7. A receptacle of any of previous claims, wherein said display device comprises an electronic paper, a TFT display, a dot matrix or segmented display, a black and white display, grey scale display, coloured display, hologram display or touch sensitive display and/or wherein said display device is a curved/bent display, and/or wherein the receptacle comprises an identification device readable outside the receptacle, such as barcode, 2D barcode, or RFID or NFC tag.

8. A receptacle of any of previous claims, wherein the receptacle comprises a positioning device, such as a GPS or local positioning device, whereupon the receptacle is also configured to be provided with a map data to be displayed with said display device, whereupon the receptacle is configured to be functioning as a navigation device using the positioning data and the corresponding map data.

9. A receptacle of any of previous claims, wherein the receptacle comprises
- a liquid surface level determining device, such as a capacitive detector or electro-optical detector, whereupon the data processing device is configured to control the display device to display the determined liquid surface level, or wherein the receptacle comprises transparent portion arranged to indicate the liquid surface level of the liquid in the receptacle
- a temperature determining device, comprising a thermocouple element, whereupon the data processing device is configured to control the display device to display the determined temperature, and/or
- a concentration and/or roasting level determination device, comprising an electro-optical detector for determining of the concentration and/or roasting level, whereupon the data processing device is configured to control the display device to display the determined concentration and/or roasting level of the content of the receptacle.

10. A communication system for communicating with a receptacle of any of previous claims, wherein the communication system comprises an application system for managing data to be communicated to the receptacle,
wherein the receptacle comprises:
- an energy harvesting element for harvesting electric energy from the temperature difference between said liquid and an ambient of the receptacle,
- a data processing device,
- a display device,
- a data communication device for receiving data wirelessly from the application system,
wherein
- said energy harvesting element is configured to supply electric energy to said data communication device, data processing device and display device, whereupon
- said data processing device is configured to receive said data via said data communication device and control said display device to display said received data.

11. A communication system of claim 10, wherein the application system has an access to a user account, said application system or user account being configured to receive data from other users or other applications and to be sent to said data communication device of the receptacle to be displayed.

12. A communication system of any of claims 10-11, wherein the data communication between the data communication device of the receptacle and the application system of the communication system is arranged via a data transferring devices of a mobile communication device.

13. A communication system of any of claims 10-12, wherein the receptacle comprises an identification device readable outside the receptacle.

14. A communication system of claim 13, wherein the communication system comprises a liquid manufacturing device, comprising a coffee machine, wherein said liquid manufacturing device comprises a reader for reading said identification device of the receptacle,

15. A communication system of any of claims 13-14, wherein the communication system is configured to determine user preferences stored in a user account based on said read identification information of the identification device, whereupon the liquid manufacturing device is configured to manufacture a liquid composition according to the determined user preferences.
